# EUROPÄISCHE PATENTSCHRIFT

(11) **EP 4 234 273 B1**
(45) Veröffentlichungstag und Bekanntmachung des Hinweises auf die Patenterteilung: **13.11.2024**
(21) Anmeldenummer: 23150671.8
(22) Anmeldetag: 09.01.2023
(51) Int. Cl.: B60C 11/03, B60C 11/13, B60C 11/12

(54) **FAHRZEUGLUFTREIFEN**
PNEUMATIC TYRE FOR VEHICLES
BANDAGE PNEUMATIQUE POUR VÉHICULE

(30) Priorität: 23.02.2022 DE 102022201884
(43) Veröffentlichungstag der Anmeldung: 30.08.2023
(73) Patentinhaber: Continental Reifen Deutschland GmbH, 30175 Hannover (DE)
(72) Erfinder: Wanka, Thomas, 30165 Hannover (DE); Herbst, Stephan, 30165 Hannover (DE); Rittweger, Stefan, 30165 Hannover (DE)
(74) Vertreter: Continental Corporation

(56) Entgegenhaltungen:
- WO-A1-2022/253375
- DE-A1- 102015 202 613
- DE-A1- 102015 202 615
- DE-A1- 102019 206 679
- DE-A1- 102019 207 297

## Beschreibung

Die Erfindung betrifft einen Fahrzeugluftreifen mit einem Laufstreifen mit einer schulterseitigen Profilrippe, einer mittleren Profilrippe und einer die schulterseitige Profilrippe von der mittleren Profilrippe trennenden, schulterseitigen Umfangsrille, wobei die schulterseitige Profilrippe mit Querrillen mit einer maximalen Breite von 3,0 mm bis 8,0 mm versehen ist und wobei in der mittleren Profilrippe Einschnitte ausgebildet sind, welche in die schulterseitige Umfangsrille einmünden, eine Breite von 0,8 mm bis 1,6 mm sowie eine maximale Tiefe von 70% bis 100% der Profiltiefe aufweisen.

Ein Fahrzeugluftreifen der eingangs genannten Art ist beispielsweise aus der DE 10 2019 206 679 A1 bekannt. Der Reifen weist einen Laufstreifen mit einer schulterseitigen Profilrippe, einer angrenzenden mittleren Profilrippe und einer schulterseitigen Umfangsrille auf. Die schulterseitige Profilrippe ist durch in die Umfangsrille einmündende Querrillen mit einer maximalen Breite von 3,0 mm bis 6,0 mm in langgestreckte Profilblöcke gegliedert, in welchen jeweils zwei bei der Umfangsrille endende Querrillen ausgebildet sind, wobei zwischen den langgestreckten Profilblöcken je ein unstrukturierter Zwischenprofilblock liegt. Die mittlere Profilrippe ist durch durchquerende Einschnitte mit einer Breite von 1,0 mm bis 3,0 mm und einer Tiefe von mindestens 2,0 mm und höchstens 100% der Profiltiefe in Rippenelemente gegliedert, wobei die Einschnitte im Bereich zwischen einer einmündenden Querrille und einer endenden Querrille in die Umfangsrille einmünden. Jedem langgestreckten Profilblock der schulterseitigen Profilrippe ist somit ein Rippenelement der mittleren Profilrippe zugeordnet, wodurch ein funktionell zusammenwirkender, makroblockartiger Laufstreifenbereich gebildet ist, welcher für den zwischen den Handlingeigenschaften auf trockener Fahrbahn und den Fahreigenschaften auf nasser Fahrbahn bestehenden Zielkonflikt vorteilhaft ist.

Weitere Fahrzeugluftreifen sind aus DE 10 2015 202615 A1, DE 10 2015 202613 A1, DE 10 2019 207297 A1 sowie WO 2022/253375 A1 (Stand der Technik gemäß Art. 54(3) EPÜ) bekannt.

Der Erfindung liegt die Aufgabe zugrunde, bei einem Fahrzeugluftreifen der eingangs genannten Art die Trockenperformance, insbesondere die Brems- und Handlingeigenschaften, weiter zu verbessern, wobei eine gute Nässeperformance erhalten bleiben soll.

Gelöst wird die gestellte Aufgabe erfindungsgemäß dadurch, dass die Einschnitte in der mittleren Profilrippe in Umfangsrichtung langgestreckt sind, wobei den Einschnitten jeweils eine Rillengruppe aus zumindest drei in der schulterseitigen Profilrippe aufeinanderfolgenden Querrillen zugeordnet ist, sodass sich jeder Einschnitt und die ihm zugeordnete Rillengruppe in einem eigenen Laufstreifenumfangsabschnitt befinden, wobei der Einschnitt eine in die Umfangsrichtung projizierte Länge von 60% bis 100% der in Umfangsrichtung ermittelten Länge des zugehörigen Laufstreifenumfangsabschnittes aufweist.

Beim Fahren auf nasser Fahrbahn nehmen die langgestreckten Einschnitte der mittleren Profilrippe Wasser auf, leiten dieses zügig in die schulterseitige Umfangsrille ab und entwässern derart die mittlere Profilrippe, sodass die Einschnittkanten als besonders effiziente Nassgriffkanten wirken. Die langgestreckten Einschnitte setzen die Steifigkeit der mittleren Profilrippe vorteilhafter Weise nur geringfügig herab, sodass die mittlere Profilrippe eine hohe Steifigkeit aufweist und derart die Trockenperformance verbessert ist. Im Bereich der schulterseitigen Profilrippe sorgen die Querrillen für die Entwässerung. Jeder langgestreckte Einschnitt bildet somit gemeinsam mit der zugeordneten Rillengruppe aus zumindest drei in der schulterseitigen Profilrippe aufeinanderfolgenden Querrillen eine im Hinblick auf die Trockenperformance sowie die Nässeperformance besonders vorteilhaft gestaltete Makroblockstruktur.

Gemäß einer bevorzugten Ausführung verlaufen die Einschnitte jeweils abschnittsweise in der der schulterseitigen Profilrippe zugewandten Rippenhälfte der mittleren Profilrippe und abschnittsweise in der der schulterseitigen Profilrippe abgewandten Rippenhälfte der mittleren Profilrippe. Dadurch fällt die mit den Einschnitten einhergehende Steifigkeitsreduktion der mittleren Profirippe besonders gleichmäßig aus, was für die Trockenperformance von weiterem Vorteil ist. Ferner wird die Beweglichkeit der mittleren Profilrippe unter den beim Abrollen auftretenden Kräften (also beim Abplatten des Laufstreifens) erhöht, wodurch die Wirkung der Einschnittkanten der langgestreckten Einschnitte als Nassgriffkanten verbessert ist.

Bevorzugter Weise gehören zu den Einschnitten Einschnitte, welche gegenüberliegend zu einer der randseitigen Querrillen der zugeordneten Rillengruppe in die schulterseitige Umfangsrille einmünden. Die mit den Einschnitten einhergehende Aufweichung der mittleren Profilrippe ist daher im Bereich gegenüberliegend einer randseitigen Querrille am größten. Im Bereich der Querrillen weist wiederum die schulterseitige Profilrippe ihre kleinste lokale Steifigkeit auf. Es liegen daher weniger steife Bereiche der Profilrippen und steifere Bereiche der Profilrippen voneinander durch die Umfangsrille getrennt gegenüber, wodurch die Wirkung der Makroblockstruktur im Hinblick auf die Trockenperformance und Nässeperformance weiter verbessert ist.

Eine weitere bevorzugte Ausführung ist dadurch gekennzeichnet, dass zu den Einschnitten Einschnitte gehören, welche einseitig geschlossen in der mittleren Profilrippe enden und vorzugsweise genau einmal von der Rippenmittellinie der mittleren Profilrippe geschnitten sind. Solche Einschnitte führen zu einer sehr geringen und gleichmäßigen Reduktion der Steifigkeit der mittleren Profilrippe, was für die Trockenperformance von zusätzlichem Vorteil ist.

Nachfolgend wird auf bevorzugte, miteinander kombinierbare Ausgestaltungen der zuletzt genannten bevorzugten Ausführung eingegangen.

Eine erste bevorzugte Ausgestaltung besteht darin, dass die Einschnitte jeweils einen Einschnittgrund mit einem vom geschlossenen Ende des Einschnittes ausgehenden ersten Grundabschnitt und einem an diesen anschließenden zweiten Grundabschnitt aufweisen, wobei der erste Grundabschnitt in einer in radialer Richtung ermittelten Tiefe von 1,0 mm bis 2,0 mm, insbesondere von bis zu 1,5 mm, verläuft und eine in Draufsicht entlang der Einschnittmittellinie gemessene Länge von 40% bis 60%, insbesondere von 43% bis 53%, der auf analoge Weise ermittelten Länge des Einschnittes aufweist und wobei der zweite Grundabschnitt, im Längsschnitt durch den Einschnitt betrachtet, zur radialen Richtung unter einem konstanten Winkel verläuft, eine in Draufsicht entlang der Einschnittmittellinie gemessene Länge von zumindest 20%, bevorzugt von höchstens 30%, der Länge des Einschnittes aufweist und bis in eine in radialer Richtung ermittelte Tiefe von 60% bis 100%, insbesondere von bis zu 80%, der maximalen Tiefe des Einschnittes reicht. Die abschnittsweise sehr seichte Ausführung des Einschnittes im Bereich des ersten Grundabschnittes ist für die Trockenperformance günstig. Die Neigung des zweiten Grundabschnittes verbessert die Weiterleitung von im Einschnitt fließendem Wasser in Richtung zur tiefsten Stelle des Einschnittes sowie zur Umfangsrille und ist daher für die Nässeperformance vorteilhaft.

Eine zweite bevorzugte Ausgestaltung ist dadurch gekennzeichnet, dass sich die Einschnitte, in Draufsicht betrachtet, jeweils aus einem in Umfangsrichtung langgestreckten, den Großteil der entlang der Einschnittmittellinie gemessenen Länge des Einschnittes einnehmenden Hauptabschnitt und einen an diesen anschließenden, zur schulterseitigen Umfangsrille reichenden Einmündungsabschnitt, welcher gerade, zur Umfangsrichtung unter einem Winkel von 60° bis 80°, insbesondere von 65° bis 75°, verläuft, zusammensetzen. Ein solcher Einschnitt ist für die Entwässerung der mittleren Profilrippe und daher für die Nässeperformance vorteilhaft.

Eine erste Variante der zweiten bevorzugten Ausgestaltung besteht darin, dass der Hauptabschnitt eine in die Umfangsrichtung projizierte Länge von 75% bis 95%, insbesondere von mindestens 80%, bevorzugt von mindestens 90%, der in die Umfangsrichtung projizierten Länge des Einschnittes aufweist.

Zwei weitere Varianten der zweiten bevorzugten Ausgestaltung sind dadurch gekennzeichnet,
a) dass der Hauptabschnitt in Draufsicht gerade verläuft und mit dem Einmündungsabschnitt an der der schulterseitigen Umfangsrille zugewandten Seite einen Winkel von 115° bis 125° einschließt oder
b) dass der Hauptabschnitt einen in Draufsicht gerade verlaufenden, an den Einmündungsabschnitt anschließenden Unterabschnitt aufweist, welcher mit dem Einmündungsabschnitt an der der schulterseitigen Umfangsrille zugewandten Seite einen Winkel von 115° bis 125° einschließt.

Diese Varianten sind vor allem für die Wasserdrainage im Einschnitt günstig und tragen somit zu einer weiteren Verbesserung der Nässeperformance bei.

Es ist bevorzugt,
- wenn bei Variante a) der Hauptabschnitt, in Draufsicht betrachtet, bezüglich der Umfangsrichtung gleichsinnig geneigt zum Einmündungsabschnitt sowie zur Umfangsrichtung unter einem Winkel von 3° bis 15°, insbesondere von 7° bis 13°, verläuft und
- wenn bei Variante b) der an den Einmündungsabschnitt anschließende Unterabschnitt des Hauptabschnittes, in Draufsicht betrachtet, bezüglich der Umfangsrichtung gleichsinnig geneigt zum Einmündungsabschnitt sowie zur Umfangsrichtung unter einem Winkel von 3° bis 15°, insbesondere von 7° bis 13°, verläuft.

Eine solche Winkelung verbessert die Wasserdrainage im Einschnitt weiter und ist im Hinblick auf die Beweglichkeit der Profilrippe und derart für die Wirkung der Einschnittkanten als Nassgriffkanten günstig.

Eine weitere bevorzugte Ausführung der Variante b) ist dadurch gekennzeichnet, dass der Hauptabschnitt, in Draufsicht betrachtet, aus dem an den Einmündungsabschnitt anschließenden Unterabschnitt und einem gerade, bezüglich der Umfangsrichtung gegensinnig geneigt zum Einmündungsabschnitt sowie zur Umfangsrichtung unter einem Winkel von 10° bis 20°, insbesondere von 13° bis 17°, verlaufenden weiteren Unterabschnitt zusammengesetzt ist, wobei der an den Einmündungsabschnitt anschließende Unterabschnitt eine in die Umfangsichtung projizierte Länge von 65% bis 85%, insbesondere von 70% bis 80%, der in die Umfangsrichtung projizierten Länge des Hauptabschnittes aufweist. Dies ist insbesondere für die Wasserdrainage im Einschnitt von weiterem Vorteil.

Bei der zuletzt genannten bevorzugten Ausführung ist es günstig, wenn der gegenseitige Anschluss der Unterabschnitte zu einer die mittlere Profilrippe an ihrer der schulterseitigen Umfangsrille abgewandten Seite begrenzenden, mittleren Umfangsrille einen in axialer Richtung ermittelten Abstand von 20% bis 30% der in axialer Richtung ermittelten Breite der mittleren Profilrippe aufweist. Dies ist im Hinblick auf die Steifigkeit und somit vor allem für die Trockenperformance günstig.

Sind die bereits erwähnten einseitig geschlossen in der mittleren Profilrippe endenden Einschnitte vorgesehen, ist es bevorzugt,
- wenn gegenüber jener randseitigen Querrille der Rillengruppe, gegenüberliegend welcher der einseitig geschlossen in der mittleren Profilrippe endende Einschnitt nicht in die schulterseitige Umfangsrille einmündet, in der mittleren Profilrippe ein in die schulterseitige Umfangsrille einmündender Kurzeinschnitt ausgebildet ist und/oder
- wenn gegenüber jeder mittleren Querrille der Rillengruppe in der mittleren Profilrippe jeweils ein in die schulterseitige Umfangsrille einmündender Kurzeinschnitt ausgebildet ist,
wobei der bzw. jeder Kurzeinschnitt eine Breite von 0,8 mm bis 1,6 mm, insbesondere von 1,0 mm bis 1,4 mm, eine maximale Tiefe von 70% bis 100% der Profiltiefe und eine auf die Einschnittmittellinie bezogene, in die axiale Richtung projizierte Länge von 30% bis 45%, insbesondere von zumindest 35%, der am Niveau der Rippenaußenfläche ermittelten, in die axiale Richtung projizierten Breite der mittleren Profilrippe aufweist.

Die Kurzeinschnitte erhöhen die Beweglichkeit der mittleren Profilrippe beim Abplatten des Reifens zusätzlich, wodurch die Einschnittkanten sämtlicher Einschnitte (Kurzeinschnitt(e), langgestreckter Einschnitt) als besonders effiziente Nassgriffkanten wirken. Ferner verbessern die Kurzeinschnitte die Entwässerung der mittleren Profilrippe. Somit ist die Nässeperformance insgesamt weiter verbessert.

Gemäß einer weiteren bevorzugten Ausführung gehören zu den Einschnitten Einschnitte, welche mit dem einen Ende gegenüber zu der einen randseitigen Querrille der Rillengruppe in die schulterseitige Umfangsrille einmünden und mit dem anderen Ende gegenüber zu der anderen randseitigen Querrille der Rillengruppe in die schulterseitige Umfangsrille einmünden. Solche Einschnitte sind vor allem für die Entwässerung vorteilhaft.

Eine weitere bevorzugte Ausführung ist dadurch gekennzeichnet, dass die Rillengruppe genau drei oder genau vier in einem in axialer Richtung ermittelten Abstand vor der schulterseitigen Umfangsrille endende Querrillen umfasst, wobei vorzugsweise der Abstand der beiden randseitigen Querrillen der Rillengruppe größer ist als der Abstand der mittleren Querrille(n). Die schulterseitige Profilrippe ist durch die endenden Querrillen sowohl in Umfangsrichtung als auch in Querrichtung besonders steif, was für die Handlingeigenschaften auf trockener Fahrbahn besonders günstig ist.

Eine letzte bevorzugte Ausführung ist dadurch gekennzeichnet, dass zwischen den zu einer Rillengruppe gehörenden, in Umfangsrichtung aufeinanderfolgenden Querrillen jeweils eine Mikrorille mit einer Tiefe von 0,3 mm bis 1,0 mm und einer Breite von 0,5 mm bis 1,0 mm verläuft, wobei sich die Mikrorille zumindest Großteils, bevorzugt komplett, außerhalb der Bodenaufstandsfläche befindet. Solche Mikrorillen verbessern das Entwässerungsverhalten der schulterseitigen Profilrippe, insbesondere beim Fahren von Kurven, beim Bremsen und beim Beschleunigen sowie bei höherem Wasserstand auf der Fahrbahn.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen in die Ebene abgewickelten schulterseitigen Umfangsabschnitt eines Laufstreifens eines Fahrzeugluftreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 eine Schnitt entlang der Linie IV-IV der Fig. 3,
Fig. 5 einen Schnitt entlang der Linie V-V der Fig. 3,
Fig. 6a eine Draufsicht auf einen Einschnitt,
Fig. 6b einen Schnitt entlang der Linie VIb-VIb der Fig. 6a, wobei zwischen Fig. 6a und Fig. 6b vier gestrichelte Projektionslinien P eingezeichnet sind,
Fig. 7 einen Schnitt entlang der Linie VII-VII der Fig. 3 und
Fig. 8 einen Schnitt entlang der Linie VIII-VIII der Fig. 3.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 1).

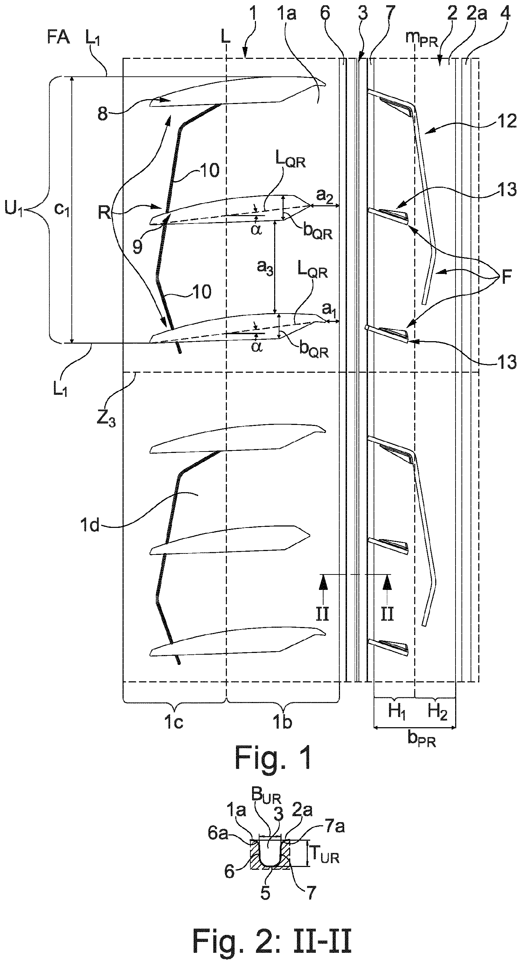

Fig. 1 zeigt eine Draufsicht auf einen Umfangsabschnitt eines Laufstreifens mit einer schulterseitigen Profilrippe 1 und einer mittleren Profilrippe 2, wobei die Profilrippen 1, 2 an der Laufstreifenperipherie jeweils eine Rippenaußenfläche 1a (Profilrippe 1), 2a (Profilrippe 2) aufweisen und wobei die mittlere Profilrippe 2 vorzugsweise halbmittige verläuft, sodass laufstreifeninnenseitig benachbart zu dieser im Bereich der Reifenäquatorialebene eine weitere Profilrippe ausgebildet ist. Der seitliche Rand der Bodenaufstandsfläche des Laufstreifens ist durch eine gestrichelte Linie L gekennzeichnet, wobei die Bodenaufstandsfläche dem statisch ermittelten Footprint gemäß E.T.R.T.O.-Standards entspricht (Last bei 70% der maximalen Tragfähigkeit bei einem Innendruck von 85% nach E.T.R.T.O.-Norm). Der Laustreifen weist bezüglich der Reifenäquatorialebene vorzugsweise eine asymmetrische Gestalt auf und wird bevorzugt derart auf der Achse eines Fahrzeuges, etwa einem PKW, montiert, dass die schulterseitige Profilrippe 1 der Fahrzeugaußenseite FA zugewandt ist.

Die schulterseitige Profilrippe 1 ist von der mittleren Profilrippe 2 durch eine in Draufsicht gerade verlaufende, schulterseitige Umfangsrille 3 getrennt und die mittlere Profilrippe 2 ist laufstreifeninnenseitig von einer in Draufsicht gerade verlaufenden, mittleren Umfangsrille 4 begrenzt. Gemäß Fig. 2 ist die schulterseitige Umfangsrille 3 durch einen Rillengrund 5, eine laufstreifenaußenseitige Rillenflanke 6 (vergl. Fig. 1) und eine laufstreifeninnenseitige Rillenflanke 7 (vergl. Fig. 1) begrenzt. Die Rillenflanken 6, 7 weisen beim gezeigten Ausführungsbeispiel jeweils eine radial äußere Übergangsrundung 6a (Rillenflanke 6), 7a (Rillenflanke 7) auf, welche, im in Draufsicht in axialer Richtung ausgerichteten Querschnitt betrachtet (vergl. Lage der Linie II-II in Fig. 1), knickfrei in die Rippenaußenfläche 1a bzw. 2a übergeht. Die Umfangsrillen 3, 4 sind in radialer Richtung jeweils in der vorgesehenen Profiltiefe T_{UR} (Fig. 2: Umfangsrille 3) ausgeführt, welche für den bevorzugten Reifentyp üblicherweise 6,5 mm bis 13,0 mm beträgt, und weisen an der Laufstreifenperipherie in axialer Richtung eine Breite B_{UR} (Fig. 2: Umfangsrille 3) von 4,0 mm bis 13,0 mm, insbesondere von 6,5 mm bis 9,0 mm, auf, wobei die Übergangsrundungen 6a, 7a bei der Ermittlung der Breite B_{UR} unberücksichtigt bleiben. Die Ermittlung der Breite B_{UR} erfolgt also derart, als wären die im Ausführungsbeispiel an die radial äußeren Übergangsrundungen 6a, 7a anschließenden, gerade verlaufenden Abschnitte der Rillenflanken 6, 7 bis zur Rippenaußenfläche 1a bzw. 2a fortgeführt.

Wie Fig. 1 ferner zeigt, weist die schulterseitige Profilrippe 1 einen innerhalb der Bodenaufstandsfläche verlaufenden Rippeninnenabschnitt 1b und einen außerhalb der Bodenaufstandsfläche verlaufenden Rippenaußenabschnitt 1c auf. Die schulterseitige Profilrippe 1 ist mit einer Vielzahl von in Umfangsrichtung aufeinanderfolgenden, jeweils abschnittsweise im Rippeninnenabschnitt 1b und abschnittsweise im Rippenaußenabschnitt 1c verlaufenden Querrillen 8, 9 versehen, von welchen lediglich die Außenkontur gezeigt ist und welche der schulterseitigen Profilrippe 1 blockförmige Rippenelemente 1d verleihen. Die Querrillen 8, 9 enden vor der schulterseitigen Umfangsrille 3, beim Ausführungsbeispiel somit vor dem radial äußeren Ende der Übergangsrundung 6a (vergl. Fig. 2), in einem an der Rippenaußenfläche 1a in axialer Richtung ermittelten Abstand a₁ von 2,5 mm bis 10,0 mm (Querrille 8) bzw. a₂ von 6,5 mm bis 14,0 mm (Querrille 9). Der Abstand a₂ ist vorzugsweise um zumindest 4,0 mm größer als der Abstand a₁, wobei in Umfangsrichtung jeweils zwei Querrillen 8 abwechselnd auf eine Querrille 9 folgen. Die Querrillen 8, 9 weisen am Niveau der Rippenaußenfläche 1a eine in Umfangsrichtung ermittelte maximale Breite b_{QR} (Breite an der breitesten Stelle) von 3,0 mm bis 8,0 mm sowie in radialer Richtung eine maximale Tiefe von 5,0 mm bis 9,0 mm auf, verlaufen - in Draufsicht betrachtet und bezogen auf gerade verlaufende Linien L_{QR}, welche entlang der jeweils größten Rillenlänge ausgerichtet sind - vorzugsweise parallel zueinander sowie zur axialen Richtung unter einem Winkel α von 0° bis 20°, insbesondere von bis zu 7°. In Umfangsrichtung unmittelbar aufeinanderfolgende Querrillen 8, 9 weisen voneinander an der Rippenaußenfläche 1c in Umfangsrichtung als kleinstmögliche Abstände ermittelte Abstände as von vorzugsweise 15,0 mm von 35,0 mm auf.

Jeweils zwei Querrillen 8 bilden mit der zwischen ihnen liegenden Querrille 9 eine Rillengruppe R, welcher ein in der mittleren Profilrippe 2 ausgebildeter, in die schulterseitige Umfangsrille 3 einmündender, einseitig geschlossen endender, insgesamt in Umfangsrichtung langgestreckter Einschnitt 12, welcher beim Ausführungsbeispiel Teil eines Einschnittfeldes F ist, gegenüberliegt und daher zugeordnet ist. Unter einem "in die schulterseitige Umfangsrille 3 einmündenden, einseitig geschlossen endenden Einschnitt 12" wird ein Einschnitt mit einem an der schulterseitigen Umfangsrille 3 liegenden, der Einschnitteinmündung entsprechenden, offenen Ende und einem von den seitlichen Rändern der mittleren Profilrippe 2, also von den Umfangsrillen 3, 4, beabstandeten und somit nicht einmündenden, geschlossenen Ende verstanden. Die Querrillen 8 sind die randseitigen Querrillen der Rillengruppe R und die Querrille 9 ist die mittlere Querrille der Rillengruppe R. Jede Rillengruppe R und der ihr zugeordnete Einschnitt 12 befinden sich in einem gemeinsamen Laufstreifenumfangsabschnitt U₁, welcher durch zwei in Draufsicht quer zur Umfangsrichtung verlaufende Linien L₁ begrenzt ist, wobei die Linien L₁ durch die in Umfangsrichtung am weitesten voneinander beabstandeten Stellen der randseitigen Querrillen 8 verlaufen. Der Laufstreifenumfangsabschnitt U₁ weist eine zwischen den Linien L₁ in Umfangsrichtung gemessene Länge c₁ von 50,0 mm bis 80,0 mm auf.

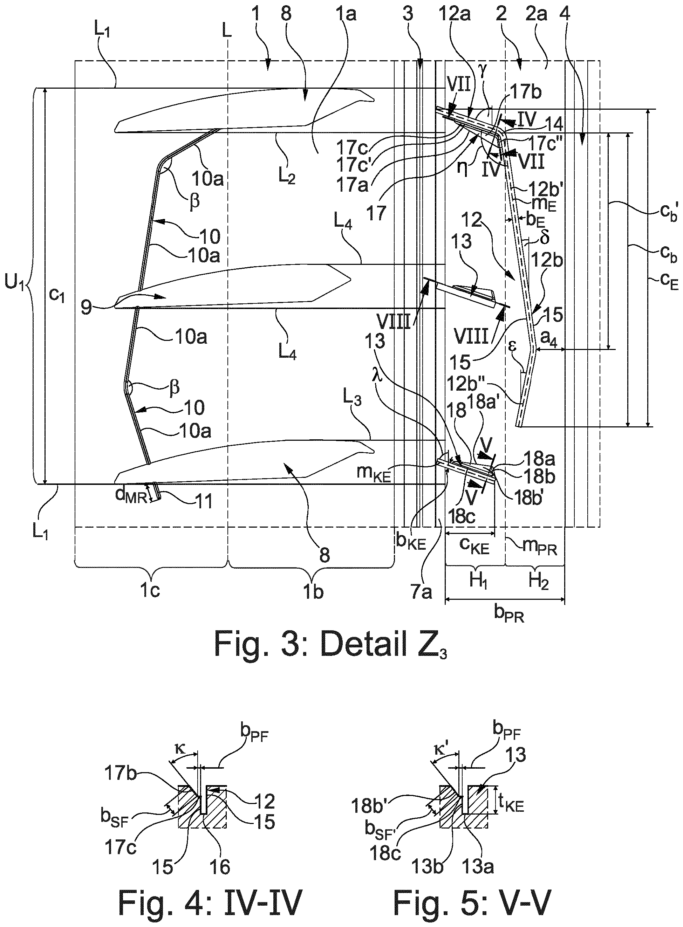

Innerhalb jeder Rillengruppe R sind die blockförmigen Rippenelemente 1d im Rippenaußenabschnitt 1c jeweils mit einer zwischen der Querrille 9 und der entsprechenden Querrille 8 verlaufenden Mikrorille 10 versehen, wobei sich jede Mikrorille 10 gemäß Fig. 3, in Draufsicht betrachtet, aus zwei gerade verlaufenden, unter einem der Laufstreifeninnenseite zugewandten Winkel β von 120° bis 160° aneinander anschließenden Mikrorillenabschnitten 10a zusammensetzt. Der eine in die Querrille 9 einmündende Mikrorillenabschnitt 10a verläuft in Draufsicht in geradliniger Verlängerung des anderen in die Querrille 9 einmündenden Mikrorillenabschnittes 10a. Die Mikrorillen 10 können auch im Rippeninnenabschnitt 1b in die Querrille 8, 9 einmünden, verlaufen jedoch jeweils zumindest Großteils im Rippenaußenabschnitt 1c. In jedem zwischen zwei Querrillen 8 liegenden Rippenelement 1d ist im Rippenaußenabschnitt 1c eine gerade verlaufende Mikrorille 11 mit einer Länge d_{MR} von bis zu 2,0 mm ausgebildet, welche in Verlängerung des in diese Querrille 8 einmündenden Mikrorillenabschnittes 10a verläuft. Die Mikrorillen 10, 11 weisen jeweils eine Tiefe von 0,3 mm bis 1,0 mm und am Niveau der Rippenaußenfläche 1a eine Breite von 0,5 mm bis 1,0 mm auf.

Gemäß Fig. 1 weist die mittlere Profilrippe 2 eine an der Rippenaußenfläche 2a in axialer Richtung ermittelte Breite b_{PR} sowie eine in Umfangsrichtung verlaufende, die mittlere Profilrippe 2 bezüglich ihrer Breite b_{PR} in zwei Rippenhälften teilende Rippenmittellinie m_{PR} auf, sodass die mittleren Profilrippe 2 eine der schulterseitigen Profilrippe 1 zugewandte Rippenhälfte H₁ und eine der schulterseitigen Profilrippe 1 abgewandte Rippenhälfte H₂ aufweist.

Die Einschnittfelder F umfassen jeweils den bereits erwähnten, einseitig geschlossen endenden, insgesamt in Umfangsrichtung langgestreckten Einschnitt 12, einen der mittleren Querrille 9 zugeordneten, einseitig geschlossen endenden Kurzeinschnitt 13 und einen der einen randseitigen Querrille 8 zugeordneten, weiteren einseitig geschlossen endenden Kurzeinschnitt 13.

Die weitere Ausgestaltung des Einschnitts 12 und der Kurzeinschnitte 13 wird nachfolgend anhand eines einzelnen Einschnittfeldes F erläutert.

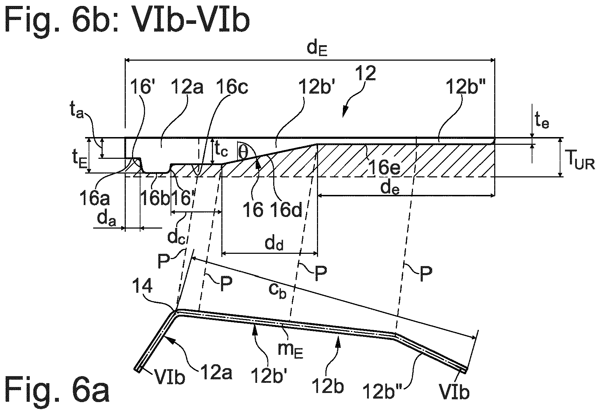

Gemäß Fig. 3 weist der Einschnitt 12 eine in Draufsicht dem Einschnittverlauf folgende Einschnittmittellinie m_{E} auf und ist durch zwei in radialer Richtung verlaufende Einschnittwände 15 (vergl. Fig. 4) und einen Einschnittgrund 16 (Fig. 4) begrenzt. Der Einschnitt 12 weist eine zwischen den Einschnittwänden 15 in Draufsicht senkrecht zur Einschnittmittellinie m_{E} ermittelte konstante Breite b_{E} von 0,8 mm bis 1,6 mm, insbesondere von 1,0 mm bis 1,4 mm, in radialer Richtung eine maximale Tiefe t_{E} (Fig. 6b, Tiefe an der tiefsten Stelle) von 70% bis 100% der Profiltiefe T_{UR} (Fig. 6b), eine auf die Einschnittmittellinie m_{E} bezogene, in die Umfangsrichtung projizierte Länge c_{E} von 60% bis 100%, insbesondere von 65% bis 90%, besonders bevorzugt von 75% bis 85%, der Länge c₁ des Laufstreifenumfangsabschnittes U₁ und eine in Draufsicht entlang Einschnittmittellinie m_{E} gemessene Länge d_{E} (Fig. 6b) auf. Bevorzugter Weise beträgt die maximale Tiefe t_{E} (Fig. 6b) des Einschnittes 12 höchstens der um 0,5 mm verringerten Profiltiefe T_{UR} (Fig. 6b). Da der Einschnitt 12 in Umfangsrichtung langgestreckt ist, sind die Enden der Einschnittmittellinie m_{E} die in Umfangsrichtung am weitesten voneinander beabstandeten Stellen der Einschnittmittellinie m_{E}. Die in Umfangsrichtung projizierte Länge c_{E} des Einschnittes 12 ist also zwischen den Enden der Einschnittmittellinie m_{E} ermittelt. Der Einschnitt 12 verläuft, in Draufsicht betrachtet, insgesamt L-artig sowie abschnittsweise in der Rippenhälfte H₁ und abschnittsweise in der Rippenhälfte H₂ und setzt sich, ebenfalls in Draufsicht betrachtet, aus einem zur schulterseitigen Umfangsrille 3 verlaufenden Einmündungsabschnitt 12a und einem komplett innerhalb der mittleren Profilrippe 2 liegenden, den Großteil der Länge d_{E} (Fig. 6b) einnehmenden Hauptabschnitt 12b zusammen.

Der Einmündungsabschnitt 12a mündet gegenüberliegend der einen randseitigen Querrille 8 in die schulterseitige Umfangsrille 3 ein, verläuft, in Draufsicht betrachtet, gerade, zur Umfangsrichtung unter einem Winkel γ von 60° bis 80°, insbesondere von 65° bis 75°, wobei die Neigung des Einmündungsabschnittes 12a entsprechend der erläuterten Längsstreckung des Einschnittes 12 ist, und befindet sich zumindest Großteils, insbesondere komplett, in der Rippenhälfte H₁. "Gegenüberliegend der randseitigen Querrille 8 einmünden" bedeutet, dass die an der schulterseitigen Umfangsrille 3 liegende Einmündung des Einmündungsabschnittes 12a zwischen der die Querrille 8 in der einen Umfangsrichtung begrenzenden Linie L₁ und einer die Querrille 8 in der anderen Umfangsrichtung begrenzenden, in Draufsicht parallel zur Linie L₁ verlaufenden Linie L₂ liegt. Die Linie L₂ verläuft somit durch die in Umfangsrichtung am weitesten von der Linie L₁ beabstandete Stelle der Querrille 8.

Der Übergang des Einmündungsabschnittes 12a und des Hauptabschnittes 12b ist bevorzugt verrundet ausgeführt, sodass an dieser Stelle eine Übergangsrundung 14 ausgebildet ist.

Der Hauptabschnitt 12b weist eine am Niveau der Rippenaußenfläche 2a ermittelte, auf die Einschnittmittellinie m_{E} bezogene, in die Umfangsrichtung projizierte Länge c_{b} von 75% bis 95%, insbesondere von zumindest 80%, bevorzugt von zumindest 90%, der Länge c_{E} des Einschnittes 12 auf, wobei die Übergangsrundung 14 bei der Ermittlung der Länge c_{b} unberücksichtigt bleibt (vergl. Fig. 6a). Die Ermittlung der Länge c_{b} erfolgt also derart, als wären der Einmündungsabschnitt 12a und der Hauptabschnitt 12b im Bereich der Übergangsrundung 14 fortgeführt. Der Hauptabschnitt 12b setzt sich, in Draufsicht betrachtet, aus einem an den Einmündungsabschnitt 12a anschließenden Unterabschnitt 12b` und einem Unterabschnitt 12b" zusammen. Der Unterabschnitt 12b` verläuft, in Draufsicht betrachtet, gerade, bezüglich der Umfangsrichtung gleichsinnig geneigt zum Einmündungsabschnitt 12a, schließt mit dem Einmündungsabschnitt 12a - bezogen auf die Einschnittmittellinie m_{E} - an der der schulterseitigen Umfangsrille 3 zugewandten Seite einen Winkel η von 115° bis 125° ein und weist eine an der Rippenaußenfläche 2a ermittelte, auf die Einschnittmittellinie m_{E} bezogene, in die Umfangsrichtung projizierte Länge c_{b}' von 65% bis 85%, insbesondere von 70% bis 80%, der Länge c_{b} auf. Bei der Ermittlung der Länge c_{b}' bleibt die Übergangsrundung 14 unberücksichtigt. Die erwähnten Winkel γ, η sind bevorzugt derart aufeinander abgestimmt, dass der Unterabschnitt 12b` - bezogen auf die Einschnittmittellinie m_{E} - zur Umfangsrichtung unter einem Winkel δ von 3° bis 15°, insbesondere von 7° bis 13°, verläuft. Der Unterabschnitt 12b" verläuft, in Draufsicht betrachtet, gerade, bezüglich der Umfangsrichtung gegensinnig geneigt zum Einmündungsabschnitt 12a und gegensinnig geneigt zum Unterabschnitt 12b` sowie - bezogen auf die Einschnittmittellinie m_{E} - zur Umfangsrichtung unter einem Winkel ε von 10° bis 20°, insbesondere von 13° bis 17°.

Bevorzugter Weise sind die erwähnten Winkel γ, δ, ε, η und die erwähnten Längen c_{E}, c_{b}, c_{b}' derart aufeinander abgestimmt, dass der gegenseitige Anschluss der Unterabschnitte 12b`, 12b" - bezogen auf die Einschnittmittellinie m_{E} - zur mittleren Umfangsrille 4 einen an der Rippenaußenfläche 2a in axialer Richtung ermittelten Abstand a₄ von 20% bis 30% der Breite b_{PR} der mittleren Profilrippe 2 aufweist und dass die Rippenmittellinie m_{PR} den Einschnitt 12 genau einmal schneidet.

Wie Fig. 6a in Kombination mit Fig. 6b zeigt, weist der Einschnittgrund 16 einen im Einmündungsabschnitt 12a ausgebildeten, zur schulterseitigen Umfangsrille 3 (vergl. Fig. 3) verlaufenden Grundabschnitt 16a, einen im Einmündungsabschnitt 12a auf der maximalen Tiefe t_{E} verlaufenden Grundabschnitt 16b, einen abschnittsweise im Einmündungsabschnitt 12a und abschnittsweise im Unterabschnitt 12b` verlaufenden Grundabschnitt 16c, einen im Unterabschnitt 12b` verlaufenden, rampenförmigen Grundabschnitt 16d und einen abschnittsweise im Unterabschnitt 12b` und abschnittsweise im Unterabschnitt 12b" verlaufenden Grundabschnitt 16e auf.

Der Grundabschnitt 16e geht vom geschlossenen Ende des Einschnittes 12 aus (vergl. Fig. 3), verläuft in einer in radialer Richtung ermittelten, konstanten Tiefe tₑ von 1,0 mm bis 2,0 mm, insbesondere von bis zu 1,5 mm, und weist eine in Draufsicht entlang der Einschnittmittellinie m_{E} gemessene Länge dₑ von 40% bis 60%, insbesondere von 43% bis 53%, der Länge d_{E} des Einschnittes 12 auf. Der rampenförmige Grundabschnitt 16d schließt in der Tiefe tₑ an den Grundabschnitt 16e an, verläuft, im entlang der Einschnittmittellinie m_{E} ausgerichteten Längsschnitt betrachtet (vergl. Lage der Schnittlinie VIb-VIb in Fig. 6a), zur radialen Richtung unter einem konstanten Winkel θ und weist eine in Draufsicht entlang der Einschnittmittellinie m_{E} gemessene Länge d_{d} von 20% bis 30% der Länge d_{E} des Einschnittes 12 auf. Der Grundabschnitt 16c verläuft in einer in radialer Richtung ermittelten konstanten Tiefe t_{c} von 60% bis 80% der maximalen Tiefe t_{E} und weist eine in Draufsicht entlang der Einschnittmittellinie m_{E} gemessene Länge d_{c} von 10% bis 25%, insbesondere von bis zu 20%, der Länge d_{E} des Einschnittes 12 auf. Der Grundabschnitt 16a verläuft in einer in radialer Richtung ermittelten, konstanten Tiefe tₐ von 45% bis 75%, insbesondere von 50% bis 70%, der maximalen Tiefe t_{E} und weist eine in Draufsicht entlang der Einschnittmittellinie m_{E} gemessene Länge dₐ von 2,7 mm bis 4,2 mm auf. Zwischen dem Grundabschnitt 16b und dem Grundabschnitt 16a sowie zwischen dem Grundabschnitt 16b und dem Grundabschnitt 16c ist jeweils eine S-förmig verlaufende Übergangsflanke 16` ausgebildet, welche, im erwähnten Längsschnitt betrachtet, tangential an die jeweiligen Grundabschnitte 16a, 16b, 16c anschließt, wobei die von der Übergangsflanke 16` mitgebildeten Verrundungen bei der Ermittlung der Längen dₐ, d_{c} nicht berücksichtigt werden.

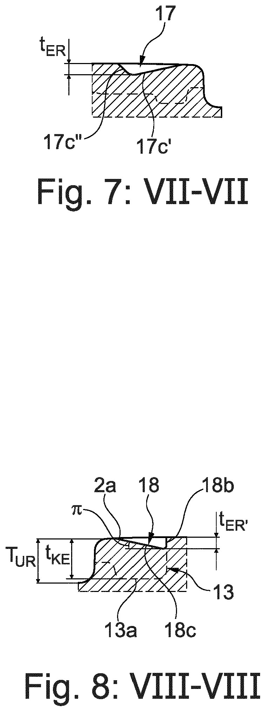

Wie Fig. 3 ferner zeigt, ist angrenzend an den Einmündungsabschnitt 12a an der über den erwähnten Winkel η verlaufenden Einschnittwand 15 eine fasenartige Erweiterung 17 ausgebildet, welche in Draufsicht parallel zum Einmündungsabschnitt 12a langgestreckt dreieckförmig ist, am Unterabschnitt 12b` endet, an der Rippenaußenfläche 2a eine in Draufsicht gerade verlaufende, die Basis des Dreieckes bildende, bezüglich der Umfangsrichtung gleichsinnig zum Einmündungsabschnitt 12a geneigte Begrenzungskante 17a aufweist und vorzugsweise zur Übergangsrundung 7a beabstandet ist. Die Erweiterung 17 ist durch eine von der Begrenzungskante 17a ausgehende Schrägfläche 17b (vergl. Fig. 4) und eine zur entsprechenden Einschnittwand 15 reichende, die Schrägfläche 17b von der Einschnittwand 15 trennende, in Draufsicht entlang der Einschnittmittellinie m_{E} langgestreckte Plateaufläche 17c (vergl. Fig. 4) begrenzt. Die Schrägfläche 17b verläuft, im in Draufsicht senkrecht zur im Bereich des Einmündungsabschnittes 12a verlaufenden Abschnitt der Einschnittmittellinie m_{E} verlaufenden Querschnitt betrachtet (vergl. Lage der Schnittlinie IV-IV in Fig. 3), zur radialen Richtung unter einem Winkel κ (Fig. 4) von 25° bis 45°, insbesondere von 30° bis 40°, und weist, im erwähnten Querschnitt betrachtet, eine maximale Breite b_{SF} (Breite an der breitesten Stelle, Fig. 3 iVm Fig. 4) von 0,7 mm bis 1,5 mm auf. Wie Fig. 3 in Kombination mit Fig. 4 zeigt, weist die Plateaufläche 17c eine konstante Breite b_{PF} (Fig. 4) von 0,4 mm bis 0,8 mm auf und setzt sich aus einem den Einmündungsabschnitt 12a entlangverlaufenden Plateauflächenabschnitt 17c' (Fig. 3) und einem über die Übergangsrundung 14 verlaufenden, am Unterabschnitt 12b` endenden Plateauflächenabschnitt 17c" zusammen, wobei die Plateauflächenabschnitte 17c`, 17c", betrachtet im in Draufsicht parallel zur Einschnittmittellinie m_{E} verlaufenden Längsschnitt, V-förmig zueinander verlaufen und an ihren einander abgewandten Enden an der Rippenaußenfläche 2a enden (Fig. 7). Gemäß Fig. 7 weist die Erweiterung 17 am gegenseitigen Anschluss der Plateauflächenabschnitte 17c`, 17c" ihre in radialer Richtung ermittelte maximale Tiefe t_{ER} von 1,5 mm bis 2,5 mm auf.

Wie Fig. 3 ferner zeigt, mündet der der mittleren Querrille 9 zugeordnete Kurzeinschnitt 13 gegenüberliegend der Querrille 9 und der der randseitigen Querrille 8 zugeordnete Kurzeinschnitt 13 gegenüberliegend der Querrille 8 in die schulterseitige Umfangsrille 3 ein. "Gegenüberliegend der Querrille 8 bzw. 9 einmünden" bedeutet, dass die Einmündung des einen Kurzeinschnittes 13 zwischen der die Querrille 8 in der einen Umfangsrichtung begrenzenden Linie L₁ und einer die Querrille 8 in der anderen Umfangsrichtung begrenzenden, in Draufsicht parallel zur Linie L₁ verlaufenden Linie L₃ liegt und dass die Einmündung des anderen Kurzeinschnittes 13 zwischen zwei in Draufsicht quer zur Umfangsrichtung verlaufenden Linien L₄, welche durch die in Umfangsrichtung am weitesten voneinander beabstandeten Stellen der Querrillen 9 verlaufen, liegt.

Jeder Kurzeinschnitt 13 weist eine Einschnittmittellinie m_{KE} auf, endet innerhalb der mittleren Profilrippe 2, ist durch einen Einschnittgrund 13a (Fig. 5; Fig. 8: Kontur des Einschnittgrundes 13a ist eingeblendet) und zwei in radialer Richtung verlaufende Einschnittwände 13b (Fig. 5) begrenzt, verläuft in Draufsicht gerade, bezüglich der Umfangsrichtung gleichsinnig geneigt zum Einmündungsabschnitt 12a und zur Umfangsrichtung unter einem Winkel λ von 60° bis 80°, insbesondere von 65° bis 75°, weist eine in Draufsicht senkrecht zur Einschnittmittellinie m_{KE} zwischen den Einschnittwänden 13b ermittelte, konstante Breite b_{KE} von 0,8 mm bis 1,6 mm, insbesondere von 1,0 mm bis 1,4 mm, eine in radialer Richtung ermittelte maximale Tiefe t_{KE} (Fig. 5, Fig. 8) von 70% bis 100% der Profiltiefe T_{UR} (Fig. 8) und eine am Niveau der Rippenaußenfläche 2a ermittelte, auf die Einschnittmittellinie m_{KE} bezogene, in die axiale projizierte Länge c_{KE} von 30% bis 45%, insbesondere von zumindest 35%, der Breite b_{PR} der mittleren Profilrippe 2 auf. Gemäß Fig. 8 weist der Kurzeinschnitt 13 beim gezeigten Ausführungsbeispiel an der schulterseitigen Umfangsrille 3 einen in radialer Richtung angehobenen Randabschnitt auf, in welchem der Kurzeinschnitt 13 in radialer Richtung eine Tiefe von zumindest 40% der Profiltiefe T_{UR} aufweist.

Wie Fig. 3 ferner zeigt, ist angrenzend an jeden Kurzeinschnitt 13 eine in Draufsicht zumindest über den Großteil der projizierten Länge c_{KE} verlaufende, bis zum im Inneren der mittleren Profilrippe 2 liegenden Ende des Kurzeinschnittes 13 reichende, fasenartige Erweiterungen 18 ausgebildet, welche in Draufsicht parallel zum Kurzeinschnitt 13 langgestreckt dreieckförmig ist, wobei die Dreieckbasis am Kurzeinschnitt 13 liegt und wobei die Erweiterung 18 vorzugsweise zur Übergangsrundung 7a beabstandet ist. Die Erweiterung 18 weist eine an der Rippenaußenfläche 2a liegende, zum Kurzeinschnitt 13 verlaufende, kürze, rippeninnenseitige Begrenzungskante 18a und eine an diese anschließende, in Richtung schulterseitige Umfangsrille 3 verlaufende, längere, rippenaußenseitige Begrenzungskante 18a' auf und ist durch eine von der Begrenzungskante 18a' ausgehende Schrägfläche 18b`, eine von der Begrenzungskante 18a ausgehende Endflanke 18b und eine in Draufsicht die Schrägfläche 18b entlangverlaufende, rechteckförmige Plateaufläche 18c begrenzt. Die Schrägfläche 18b' verläuft, im in Draufsicht senkrecht zur Einschnittmittellinie m_{KE} verlaufenden Querschnitt betrachtet (vergl. Lage der Schnittlinie V-V in Fig. 3), zur radialen Richtung unter einem Winkel κ' (Fig. 5) von 25° bis 45°, insbesondere von 30° bis 40°, und weist, im erwähnten Querschnitt betrachtet, eine maximale Breite b_{SF}' (Breite an der breitesten Stelle, Fig. 5 iVm Fig. 3) von 0,7 mm bis 1,5 mm auf. Wie Fig. 3 in Kombination mit Fig. 5 zeigt, weist die Plateaufläche 18c ebenfalls die konstante Breite b_{PF} (übereinstimmend zur Plateaufläche 17c (Fig. 4)) von 0,4 mm bis 0,8 mm auf und verläuft, betrachtet im in Draufsicht parallel zur Einschnittmittellinie m_{E} verlaufenden Längsschnitt (vergl. Lage der Schnittlinie VIII-VIII in Fig. 3), relativ zur Rippenaußenfläche 2a unter einem konstanten Winkel π (Fig. 8), wobei gemäß Fig. 8 die Neigung der Plateaufläche 18c derart ist, dass die Erweiterung 18 am der Endflanke 18b zugewandtem Ende der Plateaufläche 18c eine in radialer Richtung ermittelte maximale Tiefe t_{ER}' von 1,5 mm bis 2,5 mm aufweist und wobei die Plateaufläche 18c in Richtung schulterseitige Umfangsrille 3 an der Rippenaußenfläche 2a endet.

Die Erfindung ist auf das beschriebene Ausführungsbeispiel nicht beschränkt.

Insbesondere sind die Mikrorillen 10, 11, die Erweiterungen 17, 18 sowie die Kurzeinschnitte 13 optional. Die Rillengruppen R sind jeweils aus zumindest drei, bevorzugt aus genau drei oder genau vier, Querrillen gebildet. Die jeweils einen Laufstreifenumfangsabschnitt U₁ begrenzenden Linien L₁ verlaufen jeweils durch die in Umfangsrichtung am weitesten voneinander beabstandeten Stellen der zur entsprechenden Rillengruppe R gehörenden randseitigen Querrillen. Der Hauptabschnitt 12b des langgestreckten Einschnittes 12 kann "einteilig" ausgeführt sein, also keine Unterabschnitte 12b`, 12b" aufweisen, sodass der Hauptabschnitt 12b selbst mit dem Einmündungsabschnitt 12a den Winkel η einschließt. Der langgestreckte Einschnitt 12 kann ferner beidseitig, also mit jedem seiner Enden, in die schulterseitige Umfangsrille 3, insbesondere jeweils gegenüberliegend einer randseitigen Querrille 8, einmünden. Der Einschnittgrund 16 des langgestreckten Einschnittes 12 kann von der beschriebenen Form abweichen. Die Umfangsrillen 3, 4 können in Draufsicht wellenförmig verlaufen. Ist zumindest eine wellenförmig verlaufende Umfangsrille 3, 4 vorgesehen, ist die Breite b_{PR} der mittleren Profilrippe 2 an der Rippenaußenfläche 2a jeweils an der breitesten Stelle ermittelt. Die mittlere Profilrippe 2 ist bevorzugt frei von durchquerenden Einschnitten, also von Einschnitten, welche in die schulterseitige Umfangsrille 3 und die mittlere Umfangsrille 4 einmünden.

### Bezugszeichenliste

- 1: schulterseitige Profilrippe
- 1a: Rippenaußenfläche
- 1b: Rippeninnenabschnitt
- 1c: Rippenaußenabschnitt
- 1d: blockförmiges Rippenelement
- 2: mittlere Profilrippe
- 2a: Rippenaußenfläche
- 3: schulterseitige Umfangsrille
- 4: mittlere Umfangsrille
- 5: Rillengrund
- 6: laufstreifenaußenseitige Rillenflanke
- 6a: radial äußere Übergangsrundung
- 7: laufstreifeninnenseitige Rillenflanke
- 7a: radial äußere Übergangsrundung
- 8: Querrille
- 9: Querrille
- 10: Mikrorille
- 10a: Mikrorillenabschnitt
- 11: Mikrorille
- 12: Einschnitt
- 12a: Einmündungsabschnitt
- 12b: Hauptabschnitt
- 12b': Unterabschnitt
- 12b": Unterabschnitt
- 13: Kurzeinschnitt
- 13a: Einschnittgrund
- 13b: Einschnittwand
- 14: Übergangsrundung
- 15: Einschnittwand
- 16: Einschnittgrund
- 16a, 16b, 16c, 16d, 16e: Grundabschnitt
- 16': Übergangsflanke
- 17: fasenartige Erweiterung
- 17a: Begrenzungskante
- 17b: Schrägfläche
- 17c: Plateaufläche
- 17c', 17c": Plateauflächenabschnitt
- 18: fasenartige Erweiterung
- 18a, 18a': Begrenzungskante
- 18b: Endflanke
- 18b': Schrägfläche
- 18c: Plateaufläche
- a₁, a₂, a₃, a₄: Abstand
- b_{QR}, b_{SF}, b_{SF}': maximale Breite
- b_{E}, b_{KE}, b_{PF}, b_{PR}, B_{UR}: Breite
- c₁: Länge
- c_{b}, c_{b}', c_{E}, c_{KE}: projizierte Länge
- dₐ, d_{c}, d_{d}, dₑ, d_{E}, d_{MR}: Länge
- F: Einschnittfeld
- FA: Fahrzeugaußenseite
- H₁, H₂: Rippenhälfte
- h: Hilfslinie
- L: Linie (seitlicher Rand der Bodenaufstandsfläche)
- L₁, L₂, L₃, L₄: Linie
- L_{QR}: Linie
- m_{E}, m_{KE}: Einschnittmittellinie
- m_{PR}: Rippenmittellinie
- P: Projektionslinie
- R: Rillengruppe
- tₐ, t_{c}, tₑ: Tiefe
- t_{E}, t_{ER}, t_{KE}, t_{ER}': maximale Tiefe
- T_{UR}: Profiltiefe
- U₁: Laufstreifenumfangsabschnitt
- Z₃: Detail
- α, β, γ, δ, ε, η, θ, κ, κ', λ, π: Winkel

## Patentansprüche

1. Fahrzeugluftreifen mit einem Laufstreifen mit einer schulterseitigen Profilrippe (1), einer mittleren Profilrippe (2) und einer die schulterseitige Profilrippe (1) von der mittleren Profilrippe (2) trennenden, schulterseitigen Umfangsrille (3), wobei die schulterseitige Profilrippe (1) mit Querrillen (8, 9) mit einer maximalen Breite (b_{QR}) von 3,0 mm bis 8,0 mm versehen ist und wobei in der mittleren Profilrippe (2) Einschnitte (12) ausgebildet sind, welche in die schulterseitige Umfangsrille (3) einmünden, eine Breite (b_{E}) von 0,8 mm bis 1,6 mm sowie eine maximale Tiefe (t_{E}) von 70% bis 100% der Profiltiefe (T_{UR}) aufweisen,
**dadurch gekennzeichnet,**
**dass** die Einschnitte (12) in der mittleren Profilrippe (2) in Umfangsrichtung langgestreckt sind, wobei den Einschnitten (12) jeweils eine Rillengruppe (R) aus zumindest drei in der schulterseitigen Profilrippe (1) aufeinanderfolgenden Querrillen (8, 9) zugeordnet ist, sodass sich jeder Einschnitt (12) und die ihm zugeordnete Rillengruppe (R) in einem eigenen Laufstreifenumfangsabschnitt (U₁) befinden, wobei der Einschnitt (12) eine in die Umfangsrichtung projizierte Länge (c_{E}) von 60% bis 100% der in Umfangsrichtung ermittelten Länge (ci) des zugehörigen Laufstreifenumfangsabschnittes (U₁) aufweist.

2. Fahrzeugluftreifen nach Anspruch 1, **dadurch gekennzeichnet, dass** die Einschnitte (12) jeweils abschnittsweise in der der schulterseitigen Profilrippe (1) zugewandten Rippenhälfte (H₁) der mittleren Profilrippe (2) und abschnittsweise in der der schulterseitigen Profilrippe (1) abgewandte Rippenhälfte (H₂) der mittleren Profilrippe (2) verlaufen.

3. Fahrzeugluftreifen nach Anspruch 1 oder 2, **dadurch gekennzeichnet, dass** zu den Einschnitten (12) Einschnitte (12) gehören, welche gegenüberliegend zu einer der randseitigen Querrillen (8) der zugeordneten Rillengruppe (R) in die schulterseitige Umfangsrille (3) einmünden.

4. Fahrzeugluftreifen nach einem der Ansprüche 1 bis 3, **dadurch gekennzeichnet, dass** zu den Einschnitten (12) Einschnitte (12) gehören, welche einseitig geschlossen in der mittleren Profilrippe (2) enden und vorzugsweise genau einmal von der Rippenmittellinie (m_{E}) der mittleren Profilrippe (2) geschnitten sind.

5. Fahrzeugluftreifen nach Anspruch 4, **dadurch gekennzeichnet, dass** die Einschnitte (12) jeweils einen Einschnittgrund (16) mit einem vom geschlossenen Ende des Einschnittes (12) ausgehenden ersten Grundabschnitt (16e) und einem an diesen anschließenden zweiten Grundabschnitt (16d) aufweisen, wobei der erste Grundabschnitt (16e) in einer in radialer Richtung ermittelten Tiefe (tₑ) von 1,0 mm bis 2,0 mm, insbesondere von bis zu 1,5 mm, verläuft und eine in Draufsicht entlang der Einschnittmittellinie (m_{E}) gemessene Länge (dₑ) von 40% bis 60%, insbesondere von 43% bis 53%, der auf analoge Weise ermittelten Länge (d_{E}) des Einschnittes (12) aufweist und wobei der zweite Grundabschnitt (16d), im Längsschnitt durch den Einschnitt (12) betrachtet, zur radialen Richtung unter einem konstanten Winkel (θ) verläuft, eine in Draufsicht entlang der Einschnittmittellinie (m_{E}) gemessene Länge (d_{d}) von zumindest 20%, bevorzugt von höchstens 30%, der Länge des Einschnittes (12) aufweist und bis in eine in radialer Richtung ermittelte Tiefe (t_{c}) von 60% bis 100%, insbesondere von bis zu 80%, der maximalen Tiefe (t_{E}) des Einschnittes (12) reicht.

6. Fahrzeugluftreifen nach Anspruch 4 oder 5, **dadurch gekennzeichnet, dass** sich die Einschnitte (12), in Draufsicht betrachtet, jeweils aus einem in Umfangsrichtung langgestreckten, den Großteil der entlang der Einschnittmittellinie (m_{E}) gemessenen Länge (d_{E}) des Einschnittes (12) einnehmenden Hauptabschnitt (12b) und einen an diesen anschließenden, zur schulterseitigen Umfangsrille (3) reichenden Einmündungsabschnitt (12a), welcher gerade, zur Umfangsrichtung unter einem Winkel (γ) von 60° bis 80°, insbesondere von 65° bis 75°, verläuft, zusammensetzen.

7. Fahrzeugluftreifen nach Anspruch 6, **dadurch gekennzeichnet, dass** der Hauptabschnitt (12b) eine in die Umfangsrichtung projizierte Länge (c_{b}) von 75% bis 95%, insbesondere von mindestens 80%, bevorzugt von mindestens 90%, der in die Umfangsrichtung projizierten Länge (c_{E}) des Einschnittes (12) aufweist.

8. Fahrzeugluftreifen nach Anspruch 6 oder 7, **dadurch gekennzeichnet,**
a) **dass** der Hauptabschnitt (12b) in Draufsicht gerade verläuft und mit dem Einmündungsabschnitt (12a) an der der schulterseitigen Umfangsrille (3) zugewandten Seite einen Winkel (η) von 115° bis 125° einschließt oder
b) **dass** der Hauptabschnitt (12) einen in Draufsicht gerade verlaufenden, an den Einmündungsabschnitt (12a) anschließenden Unterabschnitt (12b') aufweist, welcher mit dem Einmündungsabschnitt (12a) an der der schulterseitigen Umfangsrille (3) zugewandten Seite einen Winkel (η) von 115° bis 125° einschließt.

9. Fahrzeugluftreifen nach Anspruch 8, **dadurch gekennzeichnet,**
- **dass** bei Variante a) der Hauptabschnitt (12b), in Draufsicht betrachtet, bezüglich der Umfangsrichtung gleichsinnig geneigt zum Einmündungsabschnitt (12a) sowie zur Umfangsrichtung unter einem Winkel (δ) von 3° bis 15°, insbesondere von 7° bis 13°, verläuft und
- **dass** bei Variante b) der an den Einmündungsabschnitt (12a) anschließende Unterabschnitt (12b') des Hauptabschnittes (12), in Draufsicht betrachtet, bezüglich der Umfangsrichtung gleichsinnig geneigt zum Einmündungsabschnitt (12a) sowie zur Umfangsrichtung unter einem Winkel (δ) von 3° bis 15°, insbesondere von 7° bis 13°, verläuft.

10. Fahrzeugluftreifen nach Anspruch 8 oder 9, **dadurch gekennzeichnet, dass** bei Variante b) der Hauptabschnitt (12b), in Draufsicht betrachtet, aus dem an den Einmündungsabschnitt (12a) anschließenden Unterabschnitt (12b') und einem gerade, bezüglich der Umfangsrichtung gegensinnig geneigt zum Einmündungsabschnitt (12a) sowie zur Umfangsrichtung unter einem Winkel (ε) von 10° bis 20°, insbesondere von 13° bis 17°, verlaufenden weiteren Unterabschnitt (12b") zusammengesetzt ist,
wobei der an den Einmündungsabschnitt (12a) anschließende Unterabschnitt (12b') eine in die Umfangsichtung projizierte Länge (c_{b}') von 65% bis 85%, insbesondere von 70% bis 80%, der in die Umfangsrichtung projizierten Länge (c_{b}) des Hauptabschnitt (12b) aufweist.

11. Fahrzeugluftreifen nach Anspruch 10, **dadurch gekennzeichnet, dass** der gegenseitige Anschluss der Unterabschnitte (12b', 12b") zu einer die mittlere Profilrippe (2) an ihrer der schulterseitigen Umfangsrille (3) abgewandten Seite begrenzenden, mittleren Umfangsrille (4) einen in axialer Richtung ermittelten Abstand (a₄) von 20% bis 30% der in axialer Richtung ermittelten Breite (b_{PR}) der mittleren Profilrippe (2) aufweist.

12. Fahrzeugluftreifen nach einem der Ansprüche 4 bis 11, **dadurch gekennzeichnet,**
- **dass** gegenüber jener randseitigen Querrille (8) der Rillengruppe (R), gegenüberliegend welcher der einseitig geschlossen in der mittleren Profilrippe (2) endende Einschnitt (12) nicht in die schulterseitige Umfangsrille (3) einmündet, in der mittleren Profilrippe (2) ein in die schulterseitige Umfangsrille (3) einmündender Kurzeinschnitt (13) ausgebildet ist und/oder
- **dass** gegenüber jeder mittleren Querrille (9) der Rillengruppe (R) in der mittleren Profilrippe (2) jeweils ein in die schulterseitige Umfangsrille (3) einmündender Kurzeinschnitt (13) ausgebildet ist,
wobei der bzw. jeder Kurzeinschnitt (13) eine Breite (b_{KE}) von 0,8 mm bis 1,6 mm, insbesondere von 1,0 mm bis 1,4 mm, eine maximale Tiefe (t_{KE}) von 70% bis 100% der Profiltiefe (T_{UR}) und eine auf die Einschnittmittellinie (m_{KE}) bezogene, in die axiale Richtung projizierte Länge (c_{KE}) von 30% bis 45%, insbesondere von zumindest 35%, der am Niveau der Rippenaußenfläche (2a) ermittelten, in die axiale Richtung projizierten Breite (b_{PR}) der mittleren Profilrippe (2) aufweist.

13. Fahrzeugluftreifen nach einem der Ansprüche 1 bis 12, **dadurch gekennzeichnet, dass** zu den Einschnitten (12) Einschnitte (12) gehören, welche mit dem einen Ende gegenüber zu der einen randseitigen Querrille (8) der Rillengruppe (R) in die schulterseitige Umfangsrille (3) einmünden und mit dem anderen Ende gegenüber zu der anderen randseitigen Querrille (8) der Rillengruppe (R) in die schulterseitige Umfangsrille (3) einmünden.

14. Fahrzeugluftreifen nach einem der Ansprüche 1 bis 13, **dadurch gekennzeichnet, dass** die Rillengruppe (R) genau drei oder genau vier in einem in axialer Richtung ermittelten Abstand (a₁, a₂) vor der schulterseitigen Umfangsrille (3) endende Querrillen (8, 9) umfasst, wobei vorzugsweise der Abstand (a₁) der beiden randseitigen Querrillen (8) der Rillengruppe (R) größer ist als der Abstand (a₂) der mittleren Querrille(n) (9).

15. Fahrzeugluftreifen nach einem der Ansprüche 1 bis 14, **dadurch gekennzeichnet, dass** zwischen den zu einer Rillengruppe (R) gehörenden, in Umfangsrichtung aufeinanderfolgenden Querrillen (8, 9) jeweils eine Mikrorille (10) mit einer Tiefe von 0,3 mm bis 1,0 mm und einer Breite von 0,5 mm bis 1,0 mm verläuft, wobei sich die Mikrorille (10) zumindest Großteils, bevorzugt komplett, außerhalb der Bodenaufstandsfläche befindet.

## Claims

1. Pneumatic vehicle tyre having a tread having a shoulder-side profile rib (1), a middle profile rib (2), and a shoulder-side circumferential groove (3) that separates the shoulder-side profile rib (1) from the middle profile rib (2), wherein the shoulder-side profile rib (1) is provided with transverse grooves (8, 9) with a maximum width (b_{QR}) of 3.0 mm to 8.0 mm, and wherein formed in the middle profile rib (2) are sipes (12) which open into the shoulder-side circumferential groove (3) and have a width (b_{E}) of 0.8 mm to 1.6 mm and a maximum depth (t_{E}) of 70% to 100% of the profile depth (T_{UR}),
**characterized in that**
the sipes (12) in the middle profile rib (2) are elongate in the circumferential direction, with the sipes (12) being respectively assigned a group of grooves (R) comprising at least three transverse grooves (8, 9) following one another in the shoulder-side profile rib (1), so that each sipe (12) and the group of grooves (R) assigned thereto are located in their own circumferential portion (U₁) of the tread, the sipe (12) having a length (c_{E}), projected in the circumferential direction, of 60% to 100% of the length (c₁), determined in the circumferential direction, of the associated circumferential portion (U₁) of the tread.

2. Pneumatic vehicle tyre according to Claim 1, **characterized in that** the sipes (12) run in each case in portions in the rib half (H₁) of the middle profile rib (2) that faces the shoulder-side profile rib (1), and in portions in the rib half (H₂) of the middle profile rib (2) that faces away from the shoulder-side profile rib (1).

3. Pneumatic vehicle tyre according to Claim 1 or 2, **characterized in that** sipes (12) which open into the shoulder-side circumferential groove (3) opposite one of the peripheral transverse grooves (8) of the assigned group of grooves (R) are associated with the sipes (12).

4. Pneumatic vehicle tyre according to one of Claims 1 to 3, **characterized in that** sipes (12) which end in the middle profile rib (2) so as to be closed on one side and are preferably intersected exactly once by the rib centreline (m_{E}) of the middle profile rib (2) are associated with the sipes (12).

5. Pneumatic vehicle tyre according to Claim 4, **characterized in that** the sipes (12) have in each case a sipe base (16) having a first base portion (16e), which proceeds from the closed end of the sipe (12), and a second base portion (16d) which adjoins said first base portion (16e), wherein the first base portion (16e) runs at a depth (tₑ), determined in a radial direction, of 1.0 mm to 2.0 mm, in particular of up to 1.5 mm, and in plan view has a length (dₑ), measured along the sipe centreline (m_{E}), of 40% to 60%, in particular of 43% to 53%, of the length (d_{E}), determined in an analogous manner, of the sipe (12), and wherein the second base portion (16d), when viewed in the longitudinal section through the sipe (12), runs at a constant angle (θ) in relation to the radial direction, in plan view has a length (d_{d}), measured along the sipe centreline (m_{E}), of at least 20%, preferably of at most 30%, of the length of the sipe (12), and reaches a depth (t_{c}), determined in a radial direction, of 60% to 100%, in particular of up to 80%, of the maximum depth (t_{E}) of the sipe (12).

6. Pneumatic vehicle tyre according to Claim 4 or 5, **characterized in that** the sipes (12) in plan view are in each case made up of a main portion (12b), which is elongate in the circumferential direction and occupies the majority of the length (d_{E}), measured along the sipe centreline (m_{E}), of the sipe (12), and of an aperture portion (12a), which adjoins said main portion (12b), reaches up to the shoulder-side circumferential groove (3), and runs straight at an angle (γ) of 60° to 80°, in particular of 65° to 75°, in relation to the circumferential direction.

7. Pneumatic vehicle tyre according to Claim 6, **characterized in that** the main portion (12b) has a length (c_{b}), projected in the circumferential direction, of 75% to 95%, in particular of at least 80%, preferably of at least 90%, of the length (c_{E}), projected in the circumferential direction, of the sipe (12).

8. Pneumatic vehicle tyre according to Claim 6 or 7, **characterized**
a) **in that** in plan view the main portion (12b) runs straight and, conjointly with the aperture portion (12a) on that side that faces the shoulder-side circumferential groove (3), encloses an angle (η) of 115° to 125°; or
b) **in that** the main portion (12) has a sub-portion (12b') which runs straight in plan view, adjoins the aperture portion (12a) and, conjointly with the aperture portion (12a) on that side that faces the shoulder-side circumferential groove (3), encloses an angle (η) of 115° to 125°.

9. Pneumatic vehicle tyre according to Claim 8, **characterized**
- **in that** in variant a) the main portion (12b), in plan view, in terms of the circumferential direction runs so as to be inclined in the same direction at an angle (δ) of 3° to 15°, in particular of 7° to 13°, in relation to the aperture portion (12a) as well as in relation to the circumferential direction, and
- **in that** in variant b) the sub-portion (12b') of the main portion (12) that adjoins the aperture portion (12a), in plan view, in terms of the circumferential direction runs so as to be inclined in the same direction at an angle (δ) of 3° to 15°, in particular of 7° to 13°, in relation to the aperture portion (12a) as well as in relation to the circumferential direction.

10. Pneumatic vehicle tyre according to Claim 8 or 9, **characterized in that** in variant b) the main portion (12b), in plan view, is made up of the sub-portion (12b') adjoining the aperture portion (12a) and a further sub-portion (12b") which runs straight and so as to be inclined in the opposite direction in terms of the circumferential direction in relation to the aperture portion (12a) and at an angle (ε) of 10° to 20°, in particular of 13° to 17°, to the circumferential direction,
wherein the sub-portion (12b') adjoining the aperture portion (12a) has a length (c_{b}'), projected in the circumferential direction, of 65% to 85%, in particular of 70% to 80%, of the length (c_{b}), projected in the circumferential direction, of the main portion (12b).

11. Pneumatic vehicle tyre according to Claim 10, **characterized in that** the mutual connection of the sub-portions (12b', 12b") to a middle circumferential groove (4) bounding the middle profile rib (2) on its side facing away from the shoulder-side circumferential groove (3) has a distance (a₄), determined in the axial direction, of 20% to 30% of the width (b_{PR}), determined in the axial direction, of the middle profile rib (2).

12. Pneumatic vehicle tyre according to any of Claims 4 to 11, **characterized**
- **in that** a short sipe (13) opening into the shoulder-side circumferential groove (3) is formed in the middle profile rib (2) in relation to that peripheral transverse groove (8) of the group of grooves (R), opposite which the sipe (12) which is closed on one side and ends in the middle profile rib (2) does not open into the shoulder-side circumferential groove (3), and/or
- **in that** a short sipe (13) opening into the shoulder-side circumferential groove (3) is in each case formed in the middle profile rib (2) in relation to each middle transverse groove (9) of the group of grooves (R),
wherein the or each short sipe (13) has a width (b_{KE}) of 0.8 mm to 1.6 mm, in particular of 1.0 mm to 1.4 mm, a maximum depth (t_{KE}) of 70% to 100% of the profile depth (T_{UR}) and a length (c_{KE}), which is based on the sipe centreline (m_{KE}) and is projected in the axial direction, of 30% to 45%, in particular of at least 35%, of the width (b_{PR}), which is determined level with the rib outer surface (2a) and is projected in the axial direction, of the middle profile rib (2).

13. Pneumatic vehicle tyre according to any of Claims 1 to 12, **characterized in that** the sipes (12) include sipes (12) which open at the one end in relation to the one peripheral transverse groove (8) of the group of grooves (R) into the shoulder-side circumferential groove (3) and open at the other end in relation to the other peripheral transverse groove (8) of the group of grooves (R) into the shoulder-side circumferential groove (3).

14. Pneumatic vehicle tyre according to any of Claims 1 to 13, **characterized in that** the group of grooves (R) comprises precisely three or precisely four transverse grooves (8, 9) ending at a distance (a₁, a₂), determined in the axial direction, before the shoulder-side circumferential groove (3), wherein preferably the spacing (a₁) of the two peripheral transverse grooves (8) of the group of grooves (R) is larger than the spacing (a₂) of the middle transverse groove(s) (9).

15. Pneumatic vehicle tyre according to any of Claims 1 to 14, **characterized in that** a micro-groove (10) with a depth of 0.3 mm to 1.0 mm and a width of 0.5 mm to 1.0 mm in each case runs between the transverse grooves (8, 9) belonging to a group of grooves (R) and following one another in the circumferential direction, wherein the micro-groove (10) is located at least for the most part, preferably entirely, outside the ground contact area.

## Revendications

1. Bandage pneumatique pour véhicule comprenant une bande de roulement avec une nervure profilée (1) du côté d'un épaulement, une nervure profilée centrale (2) et une rainure circonférentielle (3) côté épaulement, séparant la nervure profilée (1) côté épaulement de la nervure profilée centrale (2), la nervure profilée (1) côté épaulement étant pourvue de rainures transversales (8, 9) d'une largeur maximale (b_{QR}) allant de 3,0 mm à 8,0 mm et des entailles (12) étant formées dans la nervure profilée centrale (2), lesquelles débouchent dans la rainure circonférentielle (3) côté épaulement, présentent une largeur (b_{E}) allant de 0,8 mm à 1,6 mm ainsi qu'une profondeur maximale (t_{E}) allant de 70% à 100% de la profondeur du profil (T_{UR}),
**caractérisé**
**en ce que** les entailles (12) dans la nervure profilée centrale (2) s'étendent de façon allongée dans la direction circonférentielle, un groupe de rainures (R) constitué d'au moins trois rainures transversales (8, 9) qui se succèdent dans la nervure profilée (1) côté épaulement étant associé à chacune des entailles (12), de sorte que chaque entaille (12) et le groupe de rainures (R) qui lui est associé se trouvent dans une section de périphérie (U₁) de bande de roulement propre, l'entaille (12) présentant une longueur (C_{E}) projetée dans la direction circonférentielle allant de 60% à 100% de la longueur (C₁), déterminée dans la direction circonférentielle, de la section de périphérie (U₁) de bande de roulement correspondante.

2. Bandage pneumatique pour véhicule selon la revendication 1, **caractérisé en ce que** les entailles (12) s'étendent respectivement par sections dans la moitié de nervure (H₁) de la nervure profilée centrale (2) tournée vers la nervure profilée (1) côté épaulement et par sections dans la moitié de nervure (H₂) de la nervure profilée centrale (2) opposée à la nervure profilée (1) côté épaulement.

3. Bandage pneumatique pour véhicule selon la revendication 1 ou la revendication 2, **caractérisé en ce que** les entailles (12) comprennent des entailles (12) qui débouchent dans la rainure circonférentielle (3) côté épaulement, en face de l'une des rainures transversales (8) du côté du bord du groupe de rainures (R) associé.

4. Bandage pneumatique pour véhicule selon l'une des revendications 1 à 3, **caractérisé en ce que** les entailles (12) comprennent des entailles (12) qui se terminent de façon fermée d'un côté dans la nervure profilée centrale (2) et qui sont de préférence coupées exactement une fois par la ligne médiane de nervure (m_{E}) de la nervure profilée centrale (2).

5. Bandage pneumatique pour véhicule selon la revendication 4, **caractérisé en ce que** les entailles (12) présentent chacune un fond d'entaille (16) avec une première section de base (16e) partant de l'extrémité fermée de l'entaille (12) et une deuxième section de base (16d) se raccordant à celle-ci, la première section de base (16e) s'étendant à une profondeur (t_{E}) déterminée dans la direction radiale allant de 1,0 mm à 2,0 mm, en particulier jusqu'à 1,5 mm, et une longueur (dₑ) mesurée en vue de dessus le long de la ligne médiane de l'entaille (m_{E}) allant de 40% à 60%, en particulier de 43% à 53%, de la longueur (d_{E}) de l'entaille (12) déterminée de manière analogue, et la deuxième section de base (16d), vue en coupe longitudinale à travers l'entaille (12), s'étend selon un angle constant (θ) par rapport à la direction radiale, présente une longueur (d_{d}), mesurée en vue de dessus le long de la ligne médiane de l'entaille (m_{E}), d'au moins 20%, de préférence d'au plus 30%, de la longueur de l'entaille (12) et s'étend jusqu'à une profondeur (tc), déterminée dans la direction radiale, allant de 60% à 100%, en particulier jusqu'à 80%, de la profondeur maximale (t_{E}) de l'entaille (12).

6. Bandage pneumatique pour véhicule selon la revendication 4 ou la revendication 5, **caractérisé en ce que** les entailles (12), vues de dessus, se composent chacune d'une portion principale (12b) allongée dans la direction circonférentielle, occupant la majeure partie de la longueur (dₑ) de l'entaille (12) mesurée le long de la ligne médiane (m_{E}) de l'entaille, et d'une section d'embouchure (12a) se raccordant à celle-ci et s'étendant jusqu'à la rainure circonférentielle (3) côté épaulement, qui est rectiligne et forme avec la direction circonférentielle un angle (γ) allant de 60° à 80°, notamment de 65° à 75°.

7. Bandage pneumatique pour véhicule selon la revendication 6, **caractérisé en ce que** la portion principale (12b) présente une longueur (C_{b}) projetée dans la direction circonférentielle comprise entre 75% et 95%, notamment d'au moins 80%, de préférence d'au moins 90%, de la longueur (c_{E}) de l'entaille (12) projetée dans la direction circonférentielle.

8. Bandage pneumatique pour véhicule selon la revendication 6 ou la revendication 7, **caractérisé**
a) **en ce que** la portion principale (12b) est rectiligne en vue de dessus et forme un angle (η) allant de 115° à 125° avec la portion d'embouchure (12a) sur le côté tourné vers la rainure circonférentielle (3) côté épaulement ou
b) **en ce que** la portion principale (12) présente une sous-portion (12b') qui s'étend en ligne droite en vue de dessus et se raccorde à la portion d'embouchure (12a), laquelle sous-portion forme avec la portion d'embouchure (12a) un angle (η) allant de 115° à 125° sur le côté tourné vers la rainure circonférentielle (3) côté épaulement.

9. Bandage pneumatique pour véhicule selon la revendication 8, **caractérisé**
- **en ce que**, dans la variante a), la portion principale (12b), vue de dessus, est inclinée dans le même sens par rapport à la direction circonférentielle par rapport à la portion d'embouchure (12a) ainsi que par rapport à la direction circonférentielle selon un angle (δ) allant de 3° à 15°, notamment de 7° à 13°, et
- **en ce que**, dans la variante b), la sous-section (12b') de la portion principale (12) qui se raccorde à la portion d'embouchure (12a), vue de dessus, est inclinée dans le même sens par rapport à la direction circonférentielle par rapport à la portion d'embouchure (12a) ainsi que par rapport à la direction circonférentielle selon un angle (δ) allant de 3° à 15°, en particulier de 7° à 13°.

10. Bandage pneumatique pour véhicule selon la revendication 8 ou la revendication 9, **caractérisé en ce que**, dans la variante b), la portion principale (12b), vue de dessus, est composée de la portion inférieure (12b') se raccordant à la portion d'embouchure (12a) et d'une autre portion inférieure (12b") droite, inclinée en sens inverse par rapport à la direction circonférentielle par rapport à la portion d'embouchure (12a) ainsi que par rapport à la direction circonférentielle, d'un angle (ε) allant de 10° à 20°, notamment de 13° à 17°,
la sous-section (12b') qui se raccorde à la portion d'embouchure (12a) présentant une longueur (Cb') projetée dans la direction circonférentielle allant de 65% à 85%, notamment de 70% à 80%, de la longueur (C_{b}) de la portion principale (12b) projetée dans la direction circonférentielle.

11. Bandage pneumatique pour véhicule selon la revendication 10, **caractérisé en ce que** le raccordement mutuel des sous-sections (12b', 12b") à une rainure circonférentielle centrale (4) délimitant la nervure profilée centrale (2) sur son côté opposé à la rainure circonférentielle (3) côté épaulement présente une distance (a₄) déterminée dans la direction axiale, allant de 20% à 30% de la largeur (b_{PR}) déterminée dans la direction axiale de la nervure profilée centrale (2).

12. Bandage pneumatique pour véhicule selon l'une des revendications 4 à 11, **caractérisé**
- **en ce qu'**en face de la rainure transversale (8) du groupe de rainures (R) située sur le bord, en face de laquelle l'entaille (12) fermée d'un côté et se terminant dans la nervure profilée centrale (2) ne débouche pas dans la rainure circonférentielle (3) côté épaulement, une entaille courte (13) débouchant dans la rainure circonférentielle (3) côté épaulement étant réalisée dans la nervure profilée centrale (2) et/ou
- **en ce qu'**en face de chaque rainure transversale centrale (9) du groupe de rainures (R), il est formé dans la nervure profilée centrale (2) respectivement une entaille courte (13) débouchant dans la rainure circonférentielle (3) côté épaulement,
la ou chaque entaille courte (13) a une largeur (bKE) allant de 0,8 mm à 1,6 mm, en particulier de 1,0 mm à 1,4 mm, une profondeur maximale (t_{KE}) allant de 70% à 100% de la profondeur du profil (T_{UR}) et une longueur (c_{KE}), rapportée à la ligne médiane d'entaille (m_{KE}) et projetée dans la direction axiale, allant de 30% à 45%, en particulier d'au moins 35%, de la largeur (b_{PR}) de la nervure centrale (2) du profil, projetée dans la direction axiale, déterminée au niveau de la surface extérieure (2a) de la nervure.

13. Bandage pneumatique pour véhicule selon l'une des revendications 1 à 12, **caractérisé en ce que** les entailles (12) comprennent des entailles (12) qui débouchent dans la rainure circonférentielle côté épaulement (3) par une extrémité opposée à l'une des rainures transversales (8) côté bord du groupe de rainures (R) et qui débouchent dans la rainure circonférentielle (3) côté épaulement par l'autre extrémité opposée à l'autre rainure transversale (8) côté bord du groupe de rainures (R).

14. Bandage pneumatique pour véhicule selon l'une des revendications 1 à 13, **caractérisé en ce que** le groupe de rainures (R) comprend exactement trois ou exactement quatre rainures transversales (8, 9) se terminant à une distance (a₁, a₂) déterminée dans le sens axial avant la rainure circonférentielle (3) côté épaulement, la distance (a₁) des deux rainures transversales (8) côté bord du groupe de rainures (R) étant de préférence supérieure à la distance (a₂) de la ou des rainures transversales centrales (9).

15. Bandage pneumatique pour véhicule selon l'une des revendications 1 à 14, **caractérisé en ce qu'**entre les rainures transversales (8, 9) appartenant à un groupe de rainures (R) et se succédant dans la direction circonférentielle, s'étend respectivement une micro-rainure (10) d'une profondeur allant de 0,3 mm à 1,0 mm et d'une largeur allant de 0,5 mm à 1,0 mm, la micro-rainure (10) se trouvant au moins en grande partie, de préférence complètement, à l'extérieur de la surface de contact avec le sol.
